# DEMANDE DE BREVET EUROPEEN

(11) **EP 0 926 014 A1**
(43) Date de publication de la demande: **30.06.1999**
(21) Numéro de dépôt: 98403212.8
(22) Date de dépôt: 18.12.1998
(51) Int. Cl.: B60R 21/22, B60N 2/44

(54) **Housse pour siège de véhicule automobile à sac gonflable**

(30) Priorité: 19.12.1997 FR 9716125; 10.07.1998 FR 9808886
(71) Demandeur: J.C. Dezarnaud, 59115 Leers (FR)
(72) Inventeur: Rocha, Jean-Marie, 93370 Montfermeil (FR)
(74) Mandataire: Bloch, Gérard

(57) **Abrégé**

Housse pour siège de véhicule automobile à dossier renfermant au moins un sac gonflable, dans laquelle est ménagée au moins une fente latérale de sécurité (4), à deux bords (8, 9) et comprenant une lamelle de fermeture s'étendant continuement le long de ces bords (8, 9). Dans une position de fermeture de la fente, la lamelle de fermeture réunit les deux bords (8, 9) de façon détachable et les laisse s'écarter sous l'action d'une force d'ouverture du sac gonflable.

## Description

L'invention concerne les housses de siège de véhicule automobile qu'on enfile sur les garnitures de première monte, solidaires de leur siège, pour les protéger et cette invention est née d'un accroissement de la sécurité.

Les constructeurs automobiles prévoient aujourd'hui des sièges, au moins ceux du conducteur et du passager avant, donc avec un dossier, renfermant des sacs gonflables (air bags) latéraux. En cas de choc, la garniture s'ouvre et un sac sort pour protéger latéralement la personne assise sur le siège.

La demanderesse a cherché à proposer une housse pour de tels sièges de véhicule automobile permettant le passage des sacs gonflables mais qui, en situation ordinaire, de repos, ne laisse pratiquement rien transparaître, soit propre.

Après quelques essais fâcheux avec des housses pourvues d'ouvertures refermées par des moyens évidents, comme les boutons-pression, les bandes à accrochage mutuel ou autoadhésives du type de celles de la marque protégée VELCRO, la demanderesse propose son invention qui est une housse pour siège de véhicule automobile à dossier renfermant au moins un sac gonflable, dans laquelle est ménagée au moins une fente latérale de sécurité à deux bords et comprenant des moyens de fermeture s'étendant continuement le long de ces bords et agencés pour, dans une position de fermeture de la fente, réunir les deux bords de façon détachable et les laisser s'écarter sous l'action d'une force d'ouverture.

Grâce aux moyens de fermeture de la fente qui s'étendent continuement le long de ses bords en position de fermeture, et le long de cette fente, la housse ne bâille pas, ne fronce pas.

Avantageusement, il est prévu des moyens de cache pour masquer au moins les deux bords de la fente en position de fermeture, tel un jonc de couture.

De préférence, les moyens de fermeture sont agencés pour laisser les bords de la fente s'écarter sous l'action d'une force d'ouverture prédéterminée sensiblement transversalement à elle.

Les moyens de fermeture peuvent comprendre deux lamelles en un matériau ferme et flexible.

Dans ce cas, les lamelles peuvent être métalliques et, l'une au moins, aimantée mais, de préférence, elles sont en matière plastique et clipsables l'une à l'autre.

Alors, et avantageusement, les deux lamelles sont identiques et chacune comprend au moins une rainure longitudinale bordée d'une nervure crochue, les deux lamelles étant placées tête-bèche en position de fermeture de la fente.

Mais encore plus avantageusement, les moyens de fermeture comprennent une seule lamelle à deux bords, fixés respectivement aux deux bords de la fente, et une ligne amorce de rupture.

Dans ce dernier cas, la lamelle peut être cousue aux bords de la fente, la ligne amorce de rupture pouvant s'étendre à proximité d'une des lignes de points de couture, voire même être superposée à elle.

L'invention sera mieux comprise à l'aide de la description suivante de plusieurs formes de réalisation de la housse, en référence au dessin annexé, sur lequel :
- la figure 1 est une vue en perspective d'une première forme de réalisation de la housse pour dossier de siège, après ouverture de la fente ;
- la figure 2 est une vue en coupe, mais non hachurée par souci de clarté, dans un plan transversal à la fente refermée et de part et d'autre de celle-ci de la housse de la figure 1 ;
- la figure 3 est une vue de dessus d'une lamelle de fermeture d'une autre forme de réalisation de la housse de l'invention ;
- la figure 4 est une vue de dessus d'une première variante de la lamelle de fermeture de la figure 3 et
- la figure 5 est une vue de dessus d'une deuxième variante de la lamelle de fermeture de la figure 3.

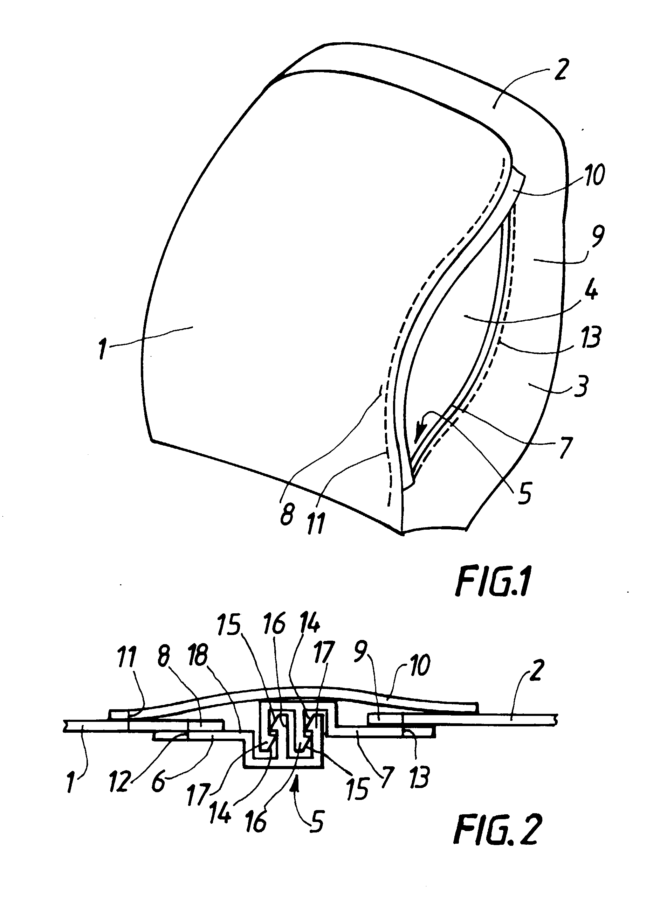

La housse représentée sur la figure 1 est celle d'un dossier de siège de véhicule renfermant des sacs gonflables (air bags) latéraux, siège dont on voit la portion avant 1 et la bande périphérique 2. Dans ses portions 3 sensiblement verticales, de côté, la bande périphérique 2, 3 et la pièce avant 1 ménagent des fentes latérales 4 s'étendant sensiblement sur la hauteur du dossier. Sur la figure 1, celle qu'on voit a été laissée béante, ouverte, après développement de l'action et passage d'un sac gonflable.

En fonction normale de repos, chaque fente 4 est refermée par une fermeture à glissière en matière plastique 5, sans curseur, dont les deux lamelles 6, 7 ont été cousues aux deux bords 8, 9 de la fente. Sur la figure 1, on ne voit qu'une 7 des deux lamelles, l'autre étant masquée par un jonc de cache 10 cousu en 11 à la pièce avant 1. En position de fermeture (figure 2), le jonc 10 masque les deux lamelles 6, 7. Les deux lamelles 6, 7 de la fermeture à glissière sont cousues à la pièce avant 1 et à la bande périphérique 2 de façon continue en 12, 13 le long des bords 8, 9 de cette pièce avant 1 et de la bande périphérique 2 de la housse.

En un matériau ferme et flexible, et cousues tout le long des bords de la fente, en position de fermeture, la housse ne bâille pas et ne fronce pas.

Les deux lamelles 6, 7 de la fermeture 5 sont identiques et clipsables l'une à l'autre. Chacune des lamelles comporte deux rainures longitudinales 14, 15 ménagées entre deux nervures crochues 16, 17 et une 16 des deux nervures crochues et un épaulement 18 de la lamelle, les nervures 16, 17 bordant les rainures 14, 15 d'une des lamelles, en position de fermeture de la fente, étant engagées dans les rainures 15, 14 de l'autre lamelle, les deux lamelles étant ainsi placées tête-bèche et clipsées l'une à l'autre par l'accrochage mutuel des nervures crochues 16, 17 - 17, 16 des deux lamelles 6, 7.

En cas de choc, et sous l'action de la force prédéterminée d'un sac gonflable de sécurité s'exerçant notamment transversalement aux fentes de sécurité, les lamelles 6, 7 de leurs fermetures 5 se désolidarisent l'une de l'autre et les bords 8, 9 des fentes 4 se détachent et s'écartent l'un de l'autre.

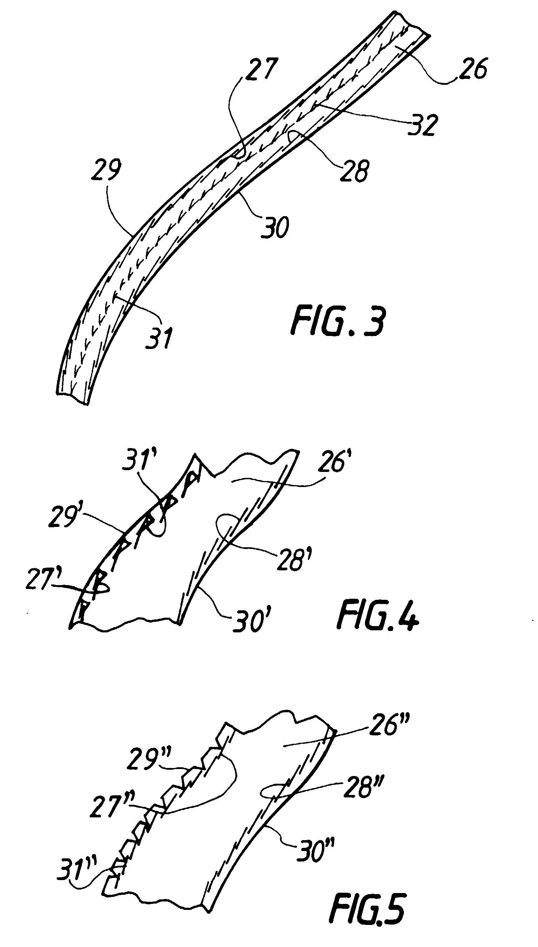

Les deux bords 8, 9 de la fente 4 peuvent être maintenus rapprochés l'un de l'autre en position de repos, de fermeture de la fente, par une seule lamelle 26, toujours en un matériau ferme et flexible comme une matière plastique (figure 3). La lamelle 26 a été cousue aux deux bords 8, 9 de la fente le long de deux lignes de points de couture 27, 28 s'étendant près de ses propres bords longitudinaux 29, 30. Sur la figure 3, on n'a représenté que la lamelle de fermeture, à l'exclusion des bords de fente, encore par souci de clarté.

Entre les deux lignes de points 27, 28 s'étend une ligne amorce de rupture 31, constituée d'une suite d'orifices 32 de section non pas circulaire mais, ici, polygonale, en l'espèce triangulaire, percés à l'aide d'une aiguille spéciale. Grâce au caractère anguleux des orifices, en cas de choc, la déchirure de la lamelle le long de la ligne 31 est plus facile et rapide.

On a représenté sur la figure 4 une première variante de la lamelle de fermeture de la figure 3, à plus grande échelle. La lamelle 26' de la figure 4, avec ses deux bords longitudinaux 29', 30', ses deux lignes de points de couture 27', 28' et sa ligne d'amorce de rupture 31', se distingue de la lamelle 26 de la figure 3 par la superposition de la ligne d'amorce de rupture 31' et d'une 27' des deux lignes de points de couture, le fil de couture n'étant pas nécessairement piqué à travers les orifices d'amorce de rupture. Dans cette forme de réalisation, la déchirure, et donc la séparation des deux bords de la fente de la housse, est encore plus facile.

Dans la variante de réalisation de la figure 5, très proche de celle de la figure 4, avec ses deux bords 29", 30", ses deux lignes de points 27", 28" et sa ligne d'amorce de rupture 31", les deux lignes 27", 31" ne sont pas confondues, ce sont la ligne d'amorce de rupture 31" et le bord 29" qui le sont quasiment, la ligne de points de couture 27" étant toutefois à proximité immédiate de la ligne de points de rupture 31".

## Revendications

1. Housse pour siège de véhicule automobile à dossier renfermant au moins un sac gonflable, dans laquelle est ménagée au moins une fente latérale de sécurité (4), à deux bords (8, 9) et comprenant des moyens de fermeture (5) s'étendant continuement le long de ces bords (8, 9) et agencés pour, dans une position de fermeture de la fente, réunir les deux bords (8, 9) de façon détachable et les laisser s'écarter sous l'action d'une force d'ouverture.

2. Housse selon la revendication 1, dans laquelle il est prévu des moyens de cache (10) pour masquer au moins les deux bords (8, 9) de la fente (4)en position de fermeture.

3. Housse selon l'une des revendications 1 et 2, dans laquelle les moyens de fermeture (5) sont agencés pour laisser les bords (8, 9) de la fente (4) s'écarter sous l'action d'une force d'ouverture prédéterminée sensiblement transversalement à elle (4).

4. Housse selon l'une des revendications 1 à 3, dans laquelle les moyens de fermeture (5) comprennent deux lamelles (6, 7) en un matériau ferme et flexible.

5. Housse selon la revendication 4, dans laquelle les lamelles sont métalliques et, l'une au moins, aimantée.

6. Housse selon la revendication 4, dans laquelle les lamelles (6, 7) sont en matière plastique et clipsables l'une (6) à l'autre (7).

7. Housse selon la revendication 6, dans laquelle les deux lamelles (6, 7) sont identiques et chacune comprend au moins une rainure longitudinale (14) bordée d'une nervure crochue (16), les deux lamelles (6, 7) étant placées tête-bèche en position de fermeture de la fente (4).

8. Housse selon l'une des revendications 1 à 3, dans laquelle les moyens de fermeture comprennent une seule lamelle (26; 26'; 26") à deux bords (29, 30; 29', 30'; 29", 30"), fixés respectivement aux deux bords de la fente, et une ligne amorce de rupture (31; 31'; 31").

9. Housse selon la revendication 8, dans laquelle la lamelle (26") est cousue aux bords de la fente et la ligne amorce de rupture (31") s'étend à proximité d'une (27") des deux lignes (27", 28") de points de couture.

10. Housse selon la revendication 8, dans laquelle la lamelle (26') est cousue aux bords de la fente et la ligne amorce de rupture (31') est superposée à l'une (27') des deux lignes (27', 28') de points de couture.
